# EUROPÄISCHE PATENTSCHRIFT

(11) **EP 0 874 436 B1**
(45) Veröffentlichungstag und Bekanntmachung des Hinweises auf die Patenterteilung: **27.10.2010**
(21) Anmeldenummer: 98810312.3
(22) Anmeldetag: 09.04.1998
(51) Int. Cl.: H02H 5/08, B25F 5/00

(54) **Handgeführte Werkzeugmaschine mit Schutzeinrichtung**
Hand machine-tool with protection device
Machine-outil commandée à la main avec dispositif de protection

(30) Priorität: 23.04.1997 DE 19717164
(43) Veröffentlichungstag der Anmeldung: 28.10.1998
(73) Patentinhaber: HILTI Aktiengesellschaft, 9494 Schaan (LI)
(72) Erfinder: von Keudell, Leopold, 88682 Saalem (DE); Echtler, Karl, Dr., 82178 Puchheim (DE)
(74) Vertreter: Wildi, Roland

(56) Entgegenhaltungen:
- WO-A-89/01718
- DE-A- 2 631 785
- FR-A- 2 554 986

## Beschreibung

Die Erfindung betrifft eine handgeführte Werkzeugmaschine mit Schutzeinrichtung, die insbesondere den Bedienenden schützt, wenn Wasser in den Handgriff eingedrungen ist, oder wenn das Gerätegehäuse zum Beispiel aufgrund von Wasser, leitfähigem Schmutz oder auf vergleichbare andere Weise in leitende Verbindung mit der Netzspannung gelangt.

Aus der DE-PS-9 50 658 ist eine Schutzvorrichtung für Handwerkzeugmaschinen mit einem durch Isolierstoffkonstruktionsteile von den Metallteilen des Maschinengehäuses getrennten elektrischen Antriebsmotor bekannt, bei der blank verlegte Elektroden innerhalb des Gerätegehäuses an den der Verschmutzung am meisten ausgesetzten Stellen angeordnet sind. Diese sind mit Erde oder dem Nullpunkt des Netzes verbunden und dienen der Ableitung von Kriechströmen. Diese Sicherheitsvorrichtung funktioniert dann nicht, wenn die mit den Elektroden verbundene Null- oder Erdleitung unterbrochen ist. Auch besteht bei in das Gehäuse eindringendem Wasser weiterhin die Gefahr, dass aufgrund längerer "Wasser-Kriechwege" ein nicht unerheblicher Teil der möglicherweise vorhandenen Kriechströme über den Bediener an Erde abgeleitet wird, was zunächst zum leichten Elektrisieren, in schweren Fällen aber zum elektrischen Unfall führt.

Aus der DE-AS-1 05 977 ist ein Kriechstromschutz bekannt, bei dem ein über einen verschmutzten Isolierstoffträger durch zwei blanke Elektroden gehender Kurzschlussstrom einen üblicherweise in den Versorgungsnetzen angeordneten Überstromschutz zum Ansprechen bringen kann. Dieser Kriechstromschutz funktioniert unabhängig vom Schutzleiter. Auch diese Kriechstromschutzvorrichtung, die an einer solchen Stelle im Inneren des Schutzgehäuses angeordnet ist, die bevorzugt der Verschmutzung beim betrieb der Handwerkzeugmaschine ausgesetzt ist, kann den Benutzer besonders bei eindringendem Wasser, aber auch bei anderen Verschmutzungen, nicht wirkungsvoll schützen, da heutige Überstromschutzschalter, die üblicherweise in den Versorgungsnetzen angeordnet sind, normalerweise erst ab einem Strom von 16 A ansprechen.

Bekannt sind auch Fehlerstromschutzschalter, die bei einem bestimmten Fehlerstrom, beispielsweise bei Eindringen eines leitfähigen Mediums wie verschmutztem Wasser in das Gehäuse eines elektrischen Arbeitsgeräts auslösen und die Netzzuleitungen des Geräts innerhalb weniger Millisekunden unterbrechen, sodass sowohl für Geräte mit als auch ohne separatem Schutzleiter eine Gefährdung des Benutzers ausgeschlossen wird; vgl. US 4 687 906 (Haartrockner), WO 89/01718 (Haushaltsgeräte), DE 26 31 785 A1 (Massagegeräte).

Auf diesem technischen Hintergrund liegt der Erfindung die Aufgabe zugrunde, eine Schutzeinrichtung für handgeführte Werkzeugmaschinen, insbesondere für Bohrmaschinen anzugeben, die den bedienenden wirkungsvoll vor elektrischen Unfällen, insbesondere bei so genanntem Überkopfarbeiten schützt.

Die der Erfindung zu Grunde liegende Aufgabe wird durch die Merkmale des unabhängigen Anspruchs 1 gelöst. Weitere vorteilhafte Ausgestaltungen der Erfindung sind in abhängigen Patentansprüchen 2 bis 10 definiert.

Der besondere Vorteil einer erfindungsgemäßen handgeführten Werkzeugmaschine liegt darin, dass der Bedienende sowohl bei intaktem als auch bei unterbrochenem Schutzleiter geschützt wird. Bei intaktem Schutzleiter erfolgt eine Ableitung des Fehlerstroms über den Schutzleiter, ohne dass der Bedienende dies merkt. Da die Abschaltung bereits auf einem sehr tiefen Fehlerstromniveau erfolgt, ist das Gerät optimal durch Schaden infolge von Fehlerströmen geschützt. Ist der Schutzleiter unterbrochen, so fließt ein bestimmter maximaler, noch ungefährlicher Fehlerstrom über den Bedienenden zur Erde ab, bei dessen Überschreiten eine Abschaltung des Netzstroms über den Fehlerstromschutzschalter geschieht.

Fehlerströme kleiner als 10 mA, ab denen der Fehlerstromschutzschalter in einer bevorzugten Ausführungsform der Erfindung auslöst, gelten als gerade noch ungefährlich, verursachen aber bereits eine unangenehme Wirkung. Ein ausreichender Schutz des Bedienenden ist trotzdem vorhanden, da der Netzstrom ab Fehlerströmen, die größer als der bei 10 mA liegende Bemessungsstrom des Fehlerstromschutzschalters sind, innerhalb von 200 msec abgeschaltet wird. Generell kann die Auslösegrenze auch unterhalb von 10 mA liegen. Wird sie zu gering gesetzt, können jedoch Fehlauslösungen auftreten.

Die in einer bevorzugten Ausführungsform beschriebene erfindungsgemäße mehrteilige Ausführung der Schutzelektrode hat den Vorteil, daß die einzelnen Schutzelektrodenteile überall dort angeordnet werden können, wohin die Spannung über "Wasserpfade" oder leitende Schmutzschichten verschleppt werden kann. Aufgrund der Kunststoffausführung des Gerätegehäuses ist die Verschleppung auf den Bedienenden eigentlich nur dann möglich, wenn die Spannung über Luftschlitze oder Montagefugen auf die Oberfläche von berührbaren Kunststoffflächen verschleppt wird. Besonders geeignet und vorteilhaft ist daher die Anordnung der Schutzelektrode im Bereich dieser Gehäuseöffnungen.

Weitere Einzelheiten, Merkmale und Vorteile der Erfindung ergeben sich aus der nachfolgenden Beschreibung eines Ausführungsbeispiels anhand der Zeichnungen. Es zeigt:
- **Figur 1**: eine Skizze einer handgeführten Bohrmaschine, die beispielhaft zum Überkopfbohren verwendet wird, mit den Händen eines Benutzers am Gerät; und
- **Figur 2**: eine Skizze der erfindungsgemäßen Bohrmaschine, die für diese Bohrarbeiten eine beispielhaft angeordnete dreiteilige Schutzelektrode und den Wirkungsweg von Fehlerströmen aufzeigt.

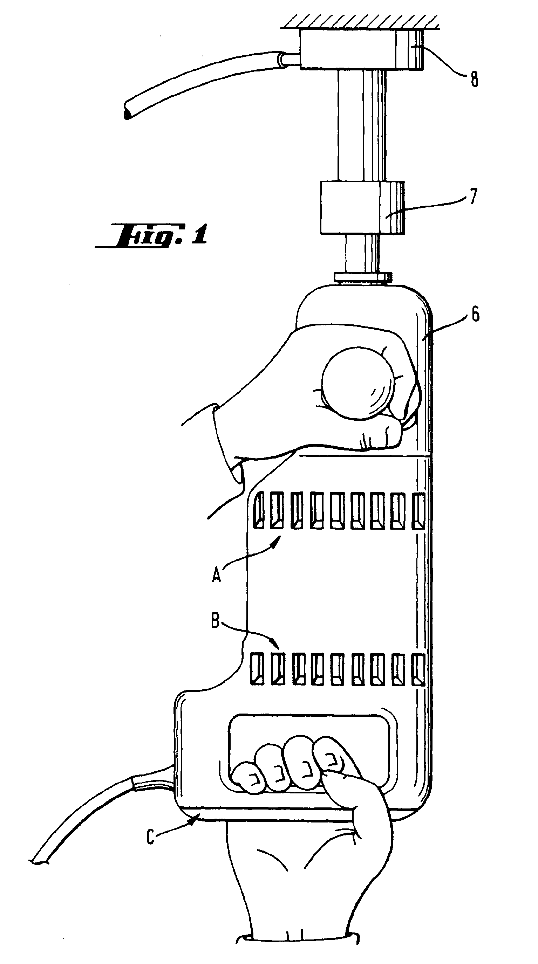

In der Figur 1 ist eine handgeführte Bohrmaschine gezeigt, die von einem Benutzer zum Überkopfbohren verwendet wird. Diese Bohrmaschine weist einen Satz Lüftungsschlitze A und einen Satz Lüftungsschlitze B sowie eine Montagefuge C auf. Handelt es sich z.B. um eine wassergekühlte Bohrmaschine und arbeitet die Wassersammelvorrichtung 8 nicht bestimmungsgemäß oder ist der Spülkopf 7 undicht geworden, so kann die Bohrmaschine voll Wasser laufen und auf den Bedienenden durch eine Wasserstrecke über die Lüftungsschlitze A oder B oder die Montagefuge C Spannung verschleppt werden. Dieses Phänomen kann natürlich auch bei anderen handgeführten Werkzeugmaschinen auftreten, auch bei nicht wassergekühlten, wenn diese mit Wasser in Berührung kommen oder wenn sich darauf und/oder darin leitfähige Schmutzschichten ansammeln.

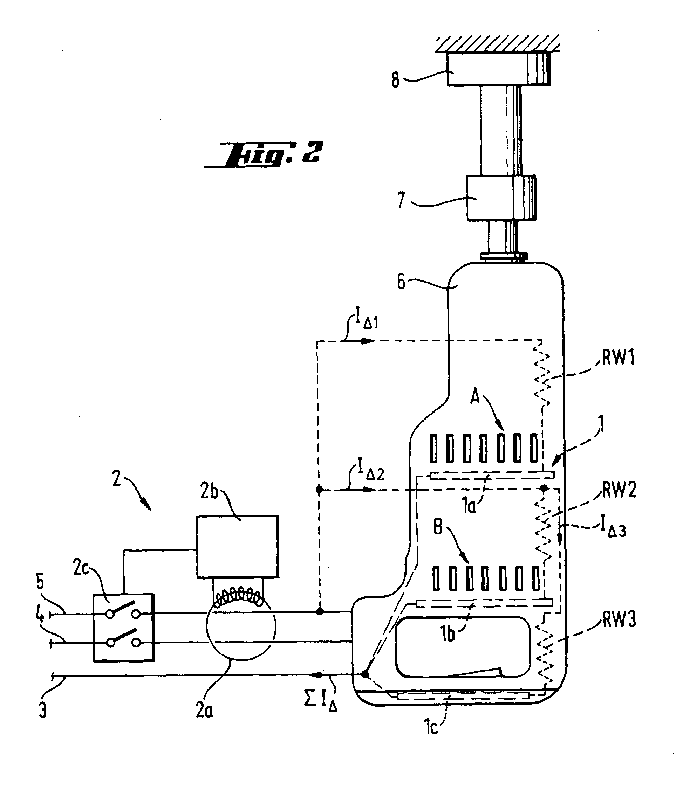

Die Figur 2 zeigt ebenfalls die schematisch in der Figur 1 dargestellte Bohrmaschine, die jedoch mit einer dreiteiligen aus den Einzelelektroden 1a, 1b und 1c bestehenden Schutzelektrode 1 und einem aus Summenstromwandler 2a, einer Auswerteelektronik 2b und einem Unterbrecherschalter 2c bestehenden Fehlerstromschutzschalter 2 versehen ist. Hier ist die Einzelelektrode 1a unterhalb der Lüftungsschlitze A, die Einzelelektrode 1b unterhalb der Lüftungsschlitze B und die Einzelelektrode 1c unterhalb der Montagefuge C angeordnet. Die Einzelelektroden 1a bis 1c sind untereinander und mit dem Schutzleiter 3 verbunden. Für den hier dargestellten Fall sind beispielhaft drei Kriechströme I_{Δ1}, I_{Δ2} und I_{Δ3} eingezeichnet, die von einer der Netzzuleitungen 4,5, hier von der Netzzuleitung 5, über Widerstände RW1, RW2 und RW3, die zum Beispiel durch Wasserstrekken gebildet werden, und die Einzelelektroden 1a bis 1c der Schutzelektrode 1 an den Schutzleiter 3 abfließen.

Ist der Schutzleiter intakt, so befindet sich die Schutzelektrode 1 auf Schutzleiterpotential. Übersteigt der gesamte durch den Schutzleiter 3 abfließende Fehlerstrom Σ I_{Δ} = I_{Δ1} + I_{Δ2} + I_{Δ3} den Bemessungsstrom des Fehlerstromschutzschalters 2, in unserem Fall 10 mA, so wird dies vom Summenstromwandler 2a und der Auswerteelektronik 2b erfaßt und es erfolgt eine Abschaltung des Netzstromes über den Unterbrecherschalter 2c, der die Netzspannungsleitungen 4 und 5 unterbricht. Auf diese Weise kann kein Kriechstrom mehr entstehen und über den Bediener abfließen.

Ist der Schutzleiter 3 defekt, so fließt der gesamte Kriechstrom Σ I_{Δ} über den Bedienenden zur Erde ab. Auch hier gilt jedoch die Beschränkung, daß der gesamte Kriechstrom Σ I_{Δ} kleiner als 10 mA ist, da bei Überschreiten des Bemessungsstroms eine Abschaltung innerhalb von 200 msec erfolgt.

Zur Messung des Fehlerstroms wird in diesem Fall ein Summenstromwandler verwendet. Der Summenstromwandler besteht aus einem Ringkern mit einer aufgewickelten Wicklung, durch den die Hin- und Rückleitung 4, 5 der Netzspannung hindurch geführt wird. Fließt in beiden Leitungen 4, 5 der gleiche Strom (kein Fehlerstrom vorhanden), so wird auch kein Strom in die Wicklung auf dem Ringkern induziert, sind die Ströme jedoch unterschiedlich stark, so kann durch einen in die Wicklung induzierten Strom erkannt werden, daß ein Fehlerstrom fließt und wie hoch dieser ist. Die Auswerteelektronik 2b erfaßt den in die Wicklung induzierten Strom und steuert den Unterbrecherschalter 2c so an, daß die Netzleitungen 4, 5 bei einem über 10 mA ansteigenden Fehlerstrom unterbrochen werden.

Es gibt auch Fehlerstromschutzschalter mit Summenstromwandlern, die ohne Elektronik arbeiten.

Die Elemente des Fehlerstromschutzschalters 2 können sich entgegen der schematischen Darstellung der Figur 2 auch innerhalb des Gerätegehäuses 6 der Werkzeugmaschine befinden.

## Patentansprüche

1. Handgeführte Werkzeugmaschine mit einer im Gehäuseinneren angeordneten Schutzelektrode (1, 1a, 1b, 1c), einem Fehlerstromschutzschalter (2), der bei einem bestimmten Fehlerstrom (Σ l_{Δ}) auslöst und die Netzzuleitungen (4, 5) der Werkzeugmaschine unterbricht, wobei der Schutzleiter (3) mit der Schutzelektrode elektrisch verbunden ist und der Schutzleiter (3) nicht abgeschaltet wird
und
wobei der Fehlerstromschutzschalter (2) den Fehlerstrom aufgrund eines Summenstromwandlers (2a) feststellt, der die Stromdifferenz der Netzspannungshin- und Rückleitung (4, 5) der Werkzeugmaschine detektiert,
**dadurch gekennzeichnet, dass**
die Schutzelektrode (1, 1a, 1 b, 1 c) so im Handgriff angeordnet ist, dass sie beim Öffnen des Handgriffs bzw. beim Entfernen des Handgriffdeckels in ihrer ursprünglichen Position bleibt.

2. Handgeführte Werkzeugmaschine nach Anspruch 1, **dadurch gekennzeichnet, daß** der Fehlerstromschutzschalter (2) bei einem Fehlerstrom (Σ I_{Δ}) von maximal 10 mA auslöst.

3. Handgeführte Werkzeugmaschine nach Anspruch 1 oder 2, **dadurch gekennzeichnet, daß** die Schutzelektrode (1-, 1a, 1b, 1c) geerdet ist.

4. handgeführte Werkzeugmaschine nach Anspruch 3, **dadurch gekennzeichnet, daß** der Fehlerstromschutzschalter (2) den Fehlerstrom anfgrund eincs an Erde abfließende Stroms feststellt.

5. Handgeführte Werkzeugmaschine nach einem der Ansprüche 1 bis 4 **dadurch gekennzeichnet, daß** die Schutzelektrode (1: 1a, 1h; 1c) verzweigt ausgeführt ist, wobei sie durch die Verzweigungen gehalten wird.

6. Handgeführte Werkzeugmaschine nach einem der Ansprüche 1 bis 5, **dadurch gekennzeichnet, daß** die Schutzelektrode (1: 1a**,** 1b, 1c) mehrtellig ausgeführt ist.

7. Handgeführte Werkzeugmaschine nach einem der Ansprüche 1 bis 6, **dadurch gekennzeichnet, daß** die Schutzelektrode (1; 1a, 1b, 1c) wenigstens in einer der bevorzugten Arbeitshaltungen der Werkzeugmaschine an deren tiefsten Punkt angeordnet ist, wo sich am ehesten Feuchtigkeit ansammeln kann.

8. Handgeführte Werkzeugmaschine nach einem der Ansprüche 1 bis 7, **dadurch gekennzeichnet, daß** die Schutzelektrode (1; 1a, 1b, 1c) an Positionen innerhalb des Gehäuses angeordnet ist, an denen sich leitfähige Medten ansammeln, können.

9. Handgeführte Werkzeugmaschine nach einem der Ansprüche 1 bis 8, **dadurch gekennzeichnet, daß** die Schutzelektrode (1; 1a, 1b, 1c) Wannen und/oder Rippen und/oder Barrieren aufweist.

10. Handgeführte Werkzeugmaschine nach einem der Ansprüche 1 bis 9, **dadurch gekennzeichnet, daß** die Schutzelektrode (1; 1a. 1b, 1c) aus einem korrosionsbeständigen Material gebildet ist.

## Claims

1. Hand machine-tool with a protective electrode (1, 1a, 1b, 1c) arranged in the housing interior, a residual current protective device (2), which is triggered by a specific fault current (Σ l_{Δ}) and interrupts the machine-tool's power leads (4, 5), in which the protective conductor (3) is electrically connected to the protective electrode and the protective conductor (3) is not disconnected
and
in which the current protective device (2) ascertains the fault current using a summation current transformer (2a) which detects the current difference of the line voltage supply and return lead (4, 5) of the hand machine-tool,
**characterised in that**
the protective electrode (1, 1a, 1b, 1c) is arranged in the handgrip in such a way that it remains in its original position during opening of the handgrip or removal of the handgrip cover.

2. Hand machine-tool according to claim 1 **characterised in that** the residual current protective device (2) is triggered by a fault current (F l_{Δ}) of a maximum of 10 mA.

3. Hand machine-tool according to claim 1 or 2 **characterised in that** the protective electrode (1, 1a, 1b, 1c) is earthed.

4. Hand machine-tool according to claim 3 **characterised in that** residual current protective device (2) detects the fault current on the basis of a current flowing to earth.

5. Hand machine-tool according to one of claims 1 to 4 **characterised in that** the protective electrode (1, 1a, 1b, 1c) is made branched, in which it is held via the branches.

6. Hand machine-tool according to one of claims 1 to 5 **characterised in that** the protective electrode (1, 1a, 1b, 1c) is made in several parts.

7. Hand machine-tool according to one of claims 1 to 6 **characterised in that**, at least in one of the preferred operating positions of the machine-tool, the protective electrode (1, 1a, 1b, 1c) is arranged at the lowest point of the machine-tool, where moisture is most likely to accumulate.

8. Hand machine-tool according to one of claims 1 to 7 **characterised in that** the protective electrode (1, 1a, 1b, 1c) is arranged in positions inside the housing, in which conductive media can accumulate.

9. Hand machine-tool according to one of claims 1 to 8 **characterised in that** the protective electrode (1, 1a, 1b, 1c) has troughs and / or ribs and / or barriers.

10. Hand machine-tool according to one of claims 1 to 9 **characterised in that** the protective electrode (1, 1a, 1b, 1c) is made of a corrosion-resistant material.

## Revendications

1. Machine-outil tenue à la main comportant une électrode de protection (1, 1a, 1b, 1c) agencée à l'intérieur d'un carter, un commutateur de protection contre un courant de défaut (2) qui se déclenche à un courant de défaut (ΣI_{Δ}) déterminé et déconnecte les fils d'alimentation en courant (4, 5) de la machine-outil, de sorte que le conducteur de protection (3) est électriquement relié à l'électrode de protection et le conducteur de protection (3) n'est pas déconnecté, et dans laquelle le commutateur de protection contre le courant de défaut (2) détermine le courant de défaut au moyen d'un transformateur de courant totalisateur (2a) qui détecte la différence de courant dans les fils d'alimentation en courant (4, 5) de la machine-outil,
**caractérisée en ce que** l'électrode de protection (1, 1a, 1b, 1c) est agencée dans la poignée de telle sorte qu'elle reste dans sa position initiale lorsque la poignée est ouverte ou lorsque le couvercle de poignée est retiré.

2. Machine-outil tenue à la main selon la revendication 1, **caractérisée en ce que** le commutateur de protection contre le courant de défaut (2) se déclenche à un courant de défaut (EI_{Δ}) d'au plus 10 mA.

3. Machine-outil tenue à la main selon la revendication 1 ou 2, **caractérisée en ce que** l'électrode de protection (1 ; 1a, 1b, 1c) est mise à la terre.

4. Machine-outil tenue à la main selon la revendication 3, **caractérisée en ce que** le commutateur de protection contre le courant de défaut (2) détermine le courant de défaut sur la base d'un courant circulant jusqu'à la terre.

5. Machine-outil tenue à la main selon l'une quelconque des revendications 1 à 4, **caractérisée en ce que** l'électrode de protection (1 ; 1a, 1b, 1c) est réalisée de manière bifurquée, et étant maintenue par les bifurcations.

6. Machine-outil tenue à la main selon l'une quelconque des revendications 1 à 5, **caractérisée en ce que** l'électrode de protection (1 ; 1a, 1b, 1c) est réalisée en plusieurs parties.

7. Machine-outil tenue à la main selon l'une quelconque des revendications 1 à 6, **caractérisée en ce que** l'électrode de protection (1 ; 1a, 1b, 1c) est agencée dans au moins une des positions de travail préférées de la machine-outil en son point le plus bas où de l'humidité peut s'accumuler le plus tôt.

8. Machine-outil tenue à la main selon l'une quelconque des revendications 1 à 7, **caractérisée en ce que** l'électrode de protection (1 ; 1a, 1b, 1c) est agencée dans des positions à l'intérieur du carter où des fluides conducteurs peuvent s'accumuler.

9. Machine-outil tenue à la main selon l'une quelconque des revendications 1 à 8, **caractérisée en ce que** l'électrode de protection (1 ; 1a, 1b, 1c) comporte des plateaux et/ou des nervures et/ou des barrières.

10. Machine-outil tenue à la main selon l'une quelconque des revendications 1 à 9, **caractérisée en ce que** l'électrode de protection (1 ; 1a, 1b, 1c) est formée à partir d'un matériau résistant à la corrosion.
